# EUROPEAN PATENT SPECIFICATION

(11) **EP 0 957 587 B1**
(45) Date of publication and mention of the grant of the patent: **28.08.2002**
(21) Application number: 99303451.1
(22) Date of filing: 04.05.1999
(51) Int. Cl.: H04B 1/10, H04B 1/12, H04B 1/50, H04B 7/155

(54) **Method and apparatus to reduce transmitter overload in a transmit scanning receiver**
Verfahren und Schaltung zum Reduktion von Übersteuerungen in einem durchstimbaren Sender-Empfänger
Procedé et circuit pour la réduction de surcharges dans un émetteur-récepteur à balayage

(30) Priority: 13.05.1998 US 76951
(43) Date of publication of application: 17.11.1999
(73) Proprietor: LUCENT TECHNOLOGIES INC., Murray Hill, New Jersey 07974-0636 (US)
(72) Inventor: Pagano, Carmine James, II, Blairstown, New Jersey 07825 (US); Rucki, John Stanley, New Providence, New Jersey 07974 (US); Wen, Jack Chi-Chieh, Parsippany, New Jersey 07054 (US); Zappala, Christopher F., Whitehouse Station, New Jersey 08889 (US)
(74) Representative: Buckley, Christopher Simon Thirsk

(56) References cited:
- EP-A- 0 905 914
- US-A- 4 383 331
- US-A- 4 776 032

## Description

### BACKGROUND OF THE INVENTION

### 1. Field of The Invention

This invention relates to communications and, more particularly, to a method and apparatus to reduce the transmitter overload of a transmit scanning receiver.

### 2. Description of Related Art

A transmit scanning receiver for a transmitter typically operates at the transmit frequencies of the transmitter and other nearby transmitters. The transmit scanning receiver scans for other nearby transmitters that are operating at the transmit frequencies. By scanning for the transmit frequencies for nearby transmitters, the transmit scanning receiver can be used to find transmit frequencies for its transmitter which are not being used by the other transmitters. Due to the typical close proximity of the transmit scanning receiver to the transmitter, transmissions from the transmitter can hamper the ability of the transmit scanning receiver to scan the transmit frequencies. For example, the front-end of the transmit scanning receiver, which typically includes the initial signal processing components of the transmit scanning receiver can become overloaded by the relatively much higher amplitude or power levels of the transmissions from the transmitter. In overloading the transmit scanning receiver, these transmissions from the transmitter causes spurious signals to be generated within the front-end of the transmit scanning receiver, thereby causing the transmit scanning receiver to be ineffective in scanning for other transmit frequencies. To prevent the overloading of the transmit scanning receiver, prior systems require the transmitter to stop transmitting when the transmit scanning receiver is scanning. Requiring the transmitter to stop transmitting when the transmit scanning receiver is scanning, however, can cause interruptions in service. For example, when a transmitter which is sending transmissions at a particular transmit frequency encounters an interferer at that frequency, the transmitter may attempt to hop to another transmit frequency for sending the transmissions. However, if the transmitter must stop transmitting to let the transmit scanning receiver scan for an acceptable transmit frequency, an interruption in service can occur.

Thus, a need exists for a system which reduces the transmitter overload of a transmit scanning receiver.

US-A-4,776,032 describes a communication system where the signals output from a receiver are modified by coupling these signals with processed samples of the transmitted signal. A control mechanism determines how the samples of the transmitted signals are processed by monitoring the modified signals from the receiver. The system applies to a single frequency repeater system where the processed signals are retransmitted at slightly modified frequencies.

US-A-4,383,331 describes a communication system where a same frequency repeater "tags" the signals it retransmits to allow it to identify and cancel any such signals received. It also processes transmitted signals and combines the signal with the output from the receiver.

According to one aspect of this invention there is provided a method as claimed in claim 1.

According to another aspect of this invention there is provided a communication system as claimed in claim 8.

The present invention reduces the transmitter overloading of a transmit scanning receiver by reducing transmitter signals transmitted from an overloading transmitter and received by the transmit scanning receiver. A sample of a transmitter signal to be transmitted is obtained from the transmitter before transmission. After the transmitter signal is transmitted and received by the transmit scanning receiver, the sample is used to reduce the transmitter signal at the transmit scanning receiver. To do so, the sample is delayed, adjusted and combined with the transmitter signal. In certain embodiments, a portion of a transmitter signal is obtained from a transmit path of a transmitter prior to transmission and put on a coupled path. The transmitter signal on the coupled path is adjusted and injected into a transmit scanning path of the transmit scanning receiver to combine with a transmitter signal which was transmitted by the transmitter and received at the transmit scanning receiver. A delay element in the coupled path is used to adjust the delay on the coupled path to correspond to the delay experienced by the transmitter signal which was transmitted by the transmitter and then received by the transmit scanning receiver. Amplitude and phase adjusters on the coupled path amplitude and phase adjust the transmitter signal on the coupled path to reduce the transmitter signal on the transmit scanning path. To improve the reduction of the transmitter signal on the transmit scanning path, measurements of at least the transmitter signal on the transmit scanning path can be made, and the measurements can be used to adjust the phase and/or amplitude of the transmitter signals on the coupled path to reduce the level of the transmitter signal on the transmit scanning path. Furthermore, successive cancellation stages comprising parallel coupled paths can be implemented to provide more suppression of the transmitter signal on the transmit scanning path.

### BRIEF DESCRIPTION OF THE DRAWINGS

Other aspects and advantages of the present invention may become apparent upon reading the following detailed description and upon reference to the drawings in which:
FIG. 1 shows a general block diagram of a system embodying the invention for reducing transmitter overload of a transmit scanning receiver; and
FIG. 2 shows a more specific embodiment of the transmitter overload reduction system of FIG. 1.

### DETAILED DESCRIPTION

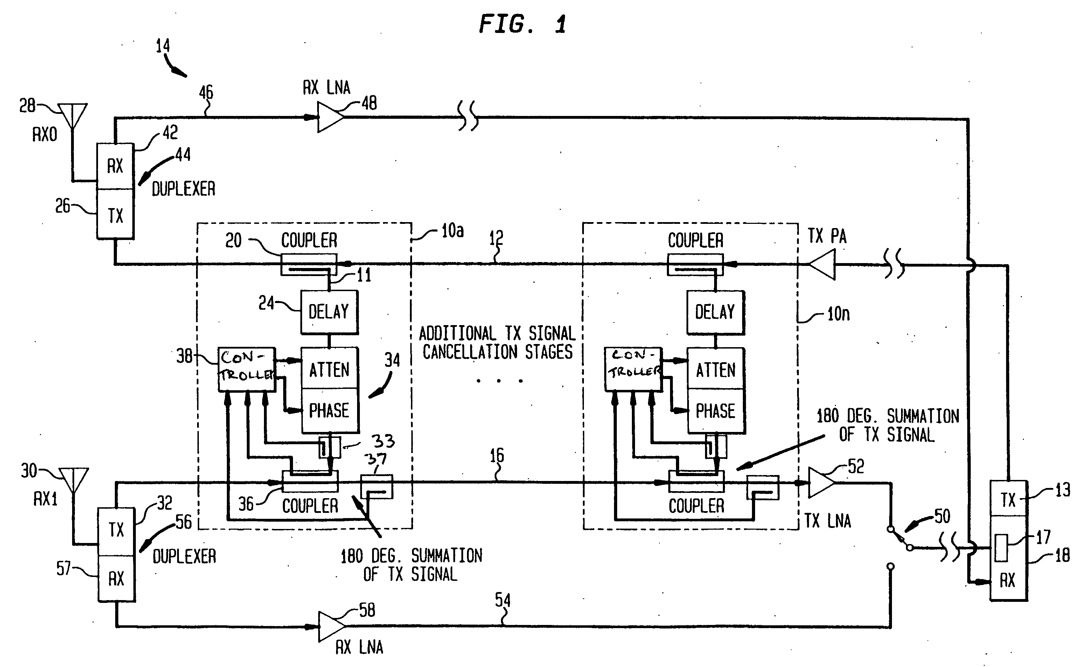

Illustrative embodiments of the method and apparatus to reduce transmitter overload in a transmit scanning receiver are described below. In FIG. 1, a transmit signal cancellation stage 10a is shown comprising a coupled path 11 between a transmit path 12 of a transmitter 13 and the transmit scanning path 16 of a transmit scanning receiver 17 of a receiver 18. In this example, the front-end of the transmitter and receiver elements 13 and 18 for the base station 14 are shown in greater detail than the remainder of the base station 14 to illustrate the present invention. For discussion purposes, the transmitter 13 and receiver 18 are simply shown as blocks, but it should be understood that the transmitter 13 and receiver 18 can include multiple radios which transmit and receive signals and can be arranged in different configurations depending on the architecture of the base station 14. The transmitter 13 and receiver 18 are described as including respective portions of the front end of the base station 14. For example, the transmit path 12 is described as part of the transmitter 13, and the transmit scanning path is described as part of the transmit scanning receiver. Additionally, the transmit scanning receiver 17 is shown as a block within the receiver 18, and it should be understood that the transmit scanning receiver can be implemented with a dedicated radio or within existing receiver circuitry depending on the application.

In this embodiment, a coupler 20 couples or provides a sample of the transmitter signals on the transmit path 12 onto the coupled path 11 of the cancellation stage 10a. In this particular embodiment, the coupler 20 introduces low loss (about .5 dB) on the transmit path 12 but can introduce 10-20dB of loss to the transmitter signals coupled onto the coupled path 11. A delay 24 in the coupled path 11 delays the transmitter signals on the coupled path 11 to coincide with the delay experienced by transmitter signals which are transmitted from the transmit path 12 and received on the transmit scanning path 16. In FIG. 1, the delay 24 reflects the relative delay difference between the delay experienced by the transmitter signals in passing through a transmit filter 26, traveling over the air from antenna 28 to antenna 30, and passing through transmit scanning filter 32 onto the transmit scanning path 16 and the delay experienced by the transmitter signal on the coupled path 11. The delay of the transmitter signals on the coupled path 11 need not exactly match the delay experienced by the transmitter signals which are transmitted to the transmit scanning path. As would be understood by one of ordinary skill in the art, however, the delays experienced by both sets of transmitter signals should match in that the corresponding portions of the transmitter signals can be combined in a manner that reduces or suppresses the transmitter signals on the transmit scanning path 16. For example, the delay difference can be on the order of picoseconds. Each stage 10n can provide about the same amount of cancellation, for example 20-30dB, but when the transmitter signal gets very small, such as -80 dBm, the cancellation becomes very small.

A phase and amplitude adjuster 34 adjusts the phase and amplitude of the transmitter signals on the coupled path 11, and a coupler 36 injects the transmitter signals from the coupled path 11 onto the transmit scanning path 16 to reduce or suppress the transmitter signals on the transmit scanning path 16. By properly adjusting the phase and/or amplitude of the coupled transmitter signals, the coupled transmitter signals will combine with the transmitter signals on the transmit scanning path 16 in a manner that reduces the transmitter signals from the transmit scanning path 16. Depending on the particular application and the particular design, the scheme can reduce the transmitter signals on the transmit scanning path 16 by 3dB-50dB (typically from 1040 dB). The amount of attenuation of the transmitter signals on the transmit scanning path 16 depends in large part on the differences between the phases and amplitudes of the corresponding portions of the transmitter signals on the transmit scanning path 16 and the transmitter signals on the coupling path 11. To increase the amount of attenuation, the amplitude difference between the transmitter signals on the transmit scanning path 16 and the coupling path 11 should approach zero and the phase difference between them should approach 180 degrees. Effective cancellation of the transmitter signal can be achieved using an amplitude difference of 2dB and a phase difference of 175-185 degrees between the received transmitter signal and the coupled transmitter signal. To further improve cancellation of the transmitter signals on the transmit scanning path 16, successive cancellation stages 10n can be used to provide additional suppression of the transmitter signals on the transmit scanning path 16. By suppressing the overloading transmitter signals on the transmit scanning path 16, the transmitter 13 can continuously transmit transmitter signals while the transmit scanning receiver 17 scans the transmit frequencies.

To improve reduction of the overloading transmitter signals on the transmit scanning path 16 in various embodiments, control circuitry 38 can measure the amplitude and/or phase of the overloading transmitter signals before and/or after a cancellation stage 10a-n and adjust the amplitude and/or phase of the transmitter signals on the coupled path 11 for improved cancellation of the transmitter signals on the transmit scanning path 16. The control circuitry 38 can also measure the phase and/or amplitude of the transmitter signals on the coupled path 11 to adjust the phase and/or amplitude of the transmitter signals on the coupled path 11 for improved cancellation of the transmitter signals on the transmit scanning path 16. The control circuitry 38 provides improved cancellation of the transmitter signals on the transmit scanning path 16 by attempting to adjust the phase and/or amplitude of the transmitter signals on the coupled path 11 to approach the amplitude of and/or achieve a 180 degree phase difference with the transmitter signals on the transmit scanning path 16.

In FIG. 1, the control circuitry 38 is shown with inputs which can be used to measure the phase and/or amplitude of the transmitter signals on the coupled path 11 using coupler 33, the phase and/or amplitude of the overloading transmitter signals on the transmit scanning path 16 prior to cancellation using coupler 36, the phase and/or amplitude of the signals on the transmit scanning receive path 16 after cancellation using coupler 37, or combinations thereof. Embodiments of the transmitter overload reduction system can include control circuitry which measures any one of these parameters, different parameters or combinations these or different parameters to adjust the amplitude and/or phase of the transmitter signals on the coupled path 11 for improved suppression of the overloading transmitter signals. Thus, reducing the overloading of the transmit scanning receiver due to transmitter signals from a transceiver of the same base station can be enhanced by using control circuitry using feedback and/or feedforward information to adjust the amplitude and/or phase of the coupled transmitter signals.

The control circuitry 38 can use one, some or all of these input parameters as inputs to a look-up table that provides the appropriate phase and/or gain for the transmitter signals on the coupled path 11. Alternatively, the control circuitry 38 can use the input parameter(s) to determine desired phase and/or amplitudes or phase and/or amplitude adjustments for the transmitter signals on the coupled path 11. For example, the control circuitry 38 can measure and compare the amplitudes and/or phases of the transmitter signals on the coupled path 11 and the transmit scanning path 16 to provide the amplitude and/or phase information. Moreover, the control circuitry 38 could simply measure the amplitude of the transmitting signal on the transmit scanning path 16 to provide amplitude information to the adjuster 34 and/or measure the phase differences between the transmitter signals to provide phase information to the adjuster 34. In another approach, the amplitude of the transmitter signal on the transmit scanning path 16 is measured prior to cancellation using coupler 36 to provide amplitude adjustment of the transmitter signals on the coupled path 11.

In other approaches, the control circuitry 38 monitors the power level of the transmitter signals on the transmit scanning path 16 after cancellation using coupler 37, and systematically changes the phase and/or amplitude adjustment in response to reductions in the power level of the overloading transmitter signals on the transmit scanning path 16 after cancellation. Different configurations and variations of the control circuitry 38 are possible. Additionally, successive cancellation stages 10n using control circuitry are possible to further suppress the overloading transmitter signals, and different cancellation stages can measure different parameters and have different configurations.

In the embodiment of FIG. 1, the cancellation stages 10a-n are coupled between the transmit path 12 of the transmitter 13 and the transmit scanning path 16 of the receiver 18 which are at the same base station 14. The base station 14 includes the antennas 28 and 30 to provide antenna diversity, and the transmit scanning path 16 is shown as coupled to the antenna 30. The present invention can be used with base station, transceiver or transmitter/receiver arrangements where a transmit scanning receiver uses a dedicated antenna or shares one or several antennas. As would be understood by one of ordinary skill in the art, the present invention can be used with a variety of configurations where transmitter signals from a particular transmitter are being suppressed on a receiver path by obtaining a sample of the transmitter signals before transmission.

In this embodiment, radio frequency (RF) signals are received by the antennas 28 and 30. The signals received on the antenna 28 pass through the RX filter 42 of the duplexer 44 and onto the first receive path 46 to a low noise amplifier 48 and to the rest of the receiver circuitry 18. Depending on the position of switch 50 (transmit scanning mode in current position) in this particular embodiment, the signals received on the antenna 30 can pass through the transmit filter 32 of the duplexer 56 onto the transmit scanning path 16. The transmit filter 32 permits the transmitter band of frequencies to pass onto the transmit scanning path 16. On the transmit scanning path 16, the transmitter signals from the transmitter 13 are suppressed by the cancellation stages 10a-n as discussed above. Then, the transmitter signals, including the suppressed transmitter signals from the transmitter 13 and the transmitter signals from other transmitters (not shown), are provided to a low noise amplifier 52. At this point in this particular embodiment, the transmitter signals from the transmitter 13 (the overloading transmitter signals) should be suppressed while the transmitter signals from the other transmitters (not shown), such as those from other base stations (not shown), are prominent and passed on to the remainder of the receiver 18 for channel use analysis.

Alternatively, in this particular embodiment, if the switch 50 is connected to a second receive path 54, the base station 40 is in a diversity receiver mode and not in a transmit scanning mode, and the signals received on the antenna 30 pass through the receive filter 57 of the duplexer 56 and onto the second receiver path 54. A low noise amplifier 58 on the second receive path 54 amplifies the received signals and provides the signals to the remainder of the receiver 18.

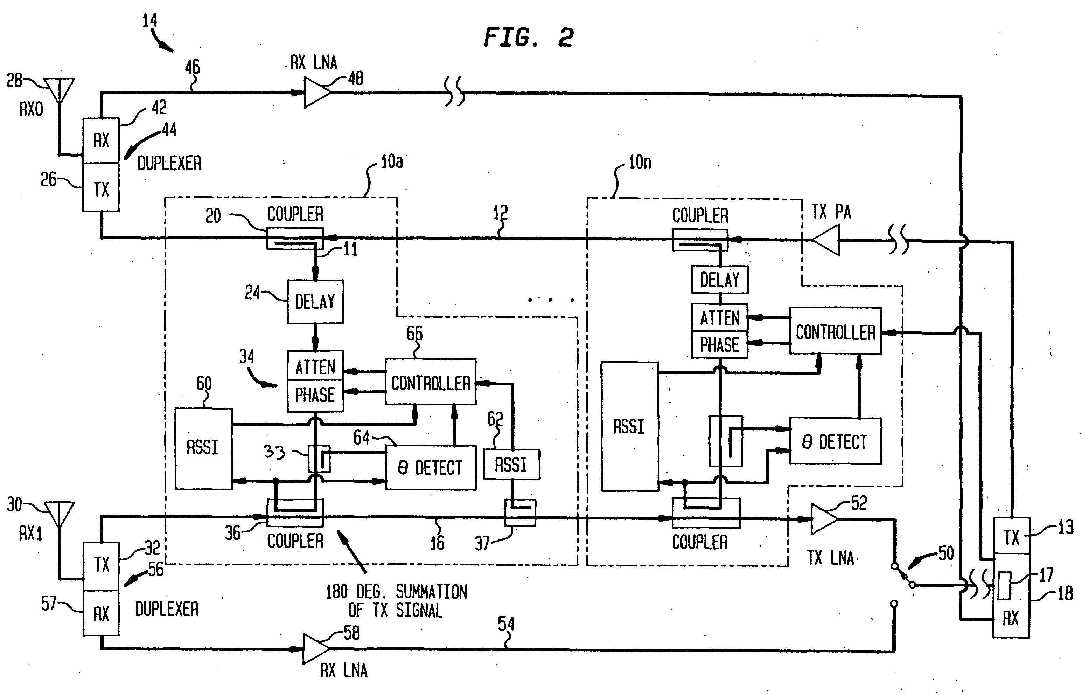

FIG. 2 shows a more particular embodiment of the cancellation stage 10a of FIG. 1. In this particular embodiment, the control circuitry 38 (FIG. 1) includes received signal strength indicators (RSSI) 60 and 62, a phase detector 64 and a controller 66. The RSSIs 60 and 62 provide signals proportional to the power levels of the measured transmitter signals to the controller 66. The RSSI 60 measures the strength or power level of the transmitter signals on the transmit scanning path 16 before the cancellation stage 10a by using the coupler 36 to couple off a portion of the transmitter signals on the transmit scanning path 16. The RSSI 62 measures the strength of the transmitter signals on the transmit scanning path 16 after the cancellation stage 10a by using a coupler 37 to couple off a portion of the transmitter signals on the path 16. In this particular embodiment, the measurements of the transmitter signals on the coupled path 11 are made after the adjuster 34 using coupler 33 (measurements could be made of the transmitter signals prior to the adjuster 34), and the measurements of the transmitter signals on the transmit scanning path 16 are made before and after cancellation using couplers 36 and 37 respectively. A phase detector 64 receives the coupled versions of the transmitter signals on the transmit scanning path 16 and the transmitter signals on the coupled path 11, and measures the phase difference between the transmitter signals on the coupled path 11 and the transmitter signals on the transmit scanning path 16. The phase detector 64 provides the phase information (which could be other than simply the phase difference) to the controller 66. In response to the inputs from the RSSIs 60 and 62 and the phase detector 64, the controller 66 provides amplitude and phase adjustment information to adjuster 34 to adjust the amplitude and/or phase of the transmitter signals on the coupled path 11 to improve suppression of the overloading transmitter signals on the transmit scanning path 16.

In certain embodiments, the controller 66 provides amplitude information to the adjuster 34 for adjusting the amplitude of the transmitter signals on the coupling path 11 based in part on the amplitude of the transmitter signals on the transmit scanning path 16 prior to cancellation such that cancellation takes place at the output of the coupler 36. The controller 66 attempts to reduce the amplitude difference between the transmitter signals on the coupling path 11 and the transmitter signals on the transmit scanning path 16. An amplitude difference of 2dB between them can be acceptable. The controller 66 provides phase information to the adjuster 34 based in part on the phase information from the phase detector 64 to adjust the phase of the transmitter signals on the coupled path 11 in attempting to achieve a phase difference of 180 degrees between the overloading transmitter signals on the transmit scanning path 16 and the transmitter signals on the coupled path 11. By achieving a 180 degree phase difference between the transmitter signals, a 180 degree summation of the transmitter signals at the output of the coupler 36 provides improved cancellation of the overloading transmitter signals on the transmit scanning path. Depending on the particular configuration, however, a 180 degree phase difference between the two versions of the transmitting signals is not required, for example, a phase difference of 175-185 degrees can be acceptable.

Different control schemes are possible to obtain cancellation. For example, the phase and/or amplitude of the overloading transmitter signals on the transmit scanning path 16 could be compared with the phase and/or amplitude of the coupled transmitter signals as a starting point in achieving cancellation. After the cancellation stage 10a, a measurement of the amplitude or power level of the overloading transmitter signals on the transmit scanning path 16 could be used to fine tune the phase and/or amplitude adjustments of the coupled transmitter signals to improve cancellation. In systems using multiple cancellation stages 10n, the RSSI 62 could be located in the transmit scanning receiver 17 to provide such amplitude information to the one, all or some of the cancellation stages 10a-n.

In addition to the embodiments described above, alternative configurations of the transmit signal cancellation system are possible which omit and/or add components and/or use variations or portions of the described cancellation system. For example, the transmitter signals have been described as being coupled from the transmit path of the transmitter 13 and coupled from the coupling path onto the transmit scanning path to reduce the transmitter signals thereon. The term coupling covers the situation where signals are sampled or split from a path and/or signals are injected, added or combined into a path. In some embodiments, the amplitudes of the overloading transmitter signals and of the coupled transmitter signals can be measured and compared to provide amplitude adjustment of the coupled transmitter signals while the post-cancellation amplitude ofthe overloading transmitter signals could be used to provide phase adjustment information to the adjuster 34 to lower the level of the overloading transmitter signals after cancellation. Alternatively, in a relatively simple embodiment, the amplitude of the overloading transmitter signals after cancellation is the only input to the controller 66 which systematically adjusts the phase and/or amplitude of the coupled transmitter signals in attempting to lower the amplitude of the transmitter signals on the transmit scanning path 16.

Furthermore, the cancellation stages 10a-n have been described using different configurations of distinct components, but it should be understood that the transmit scanning receiver cancellation system and portions thereof can be implemented in application specific integrated circuits, software-driven processing circuitry, firmware or other arrangements of discrete components as would be understood by one of ordinary skill in the art with the benefit of this disclosure. As such, although in the illustrative embodiments each cancellation stage is shown with a respective control and measurement circuitry, the control circuitry and measurement circuitry for the cancellation stages 10a-n can be part of the receiver circuitry 18. Also, each cancellation stage is shown as having the same control circuitry 38 (FIG. 1), but each cancellation stage can be controlled differently, for example by measuring different signals to adjust the phase and/or amplitude of the coupled transmitter signals. Additionally, the control circuitry can be implemented on a circuit with a feedback loop that iterates to the phase and/or amplitude adjustments that provide improved cancellation. What has been described is merely illustrative of the present invention. Those skilled in the art will readily recognize that these and various other modifications, arrangements and methods can be made without departing from the scope of the present invention.

## Claims

1. A method of operating a communication system (14) to reduce transmitter signals transmitted from a transmitter (13) and received by a transmit scanning receiver (30), said method being **CHARACTERIZED BY** the steps of:
obtaining from a transmit path (12) of said transmitter a sample of transmitter signals to be transmitted;
obtaining from a transmit scanning path (16) of said transmit scanning receiver pre-modified transmit scanning path signals;
processing said transmitter signals sample based at least in part on said pre-modified transmit scanning path signals; and
combining said processed transmitter signals sample with said pre-modified signals on said transmit scanning path (16) to reduce on said transmit scanning path said transmitter signals transmitted from said transmitter and received by said transmit scanning receiver.

2. A method as claimed in claim 1 wherein said step of obtaining includes the step of coupling from said transmit path onto a coupling path said transmitter signals to be transmitted.

3. A method as claimed in claim 2 wherein said step of processing includes the step of delaying said transmitter signals on said coupled path (11) to reflect the delay experienced by said transmitter signals transmitted from said transmitter from said transmit path (12) to said transmit scanning path (16).

4. A method as claimed in claim 2 wherein said step of processing includes the step of adjusting the amplitude of said transmitter signals on said coupled path (11).

5. A method as claimed in claim 2 wherein said step of processing includes the step of measuring the power level of said transmitter signals transmitted from said transmitter to adjust the amplitude of said transmitter signals on said coupled path (11).

6. A method as claimed in claim 2 wherein said step of processing includes the step of adjusting the phase of said transmitter signals on said coupled path (11).

7. A method as claimed in claim 2 wherein said step of combining includes the step of coupling said transmitter signals on said coupled path onto said transmit scanning path to suppress said transmitter signals transmitted from said transmitter.

8. A communication system (14) including a transmitter (13) with a transmit path (12) for carrying transmitter signals and a transmit scanning receiver (17) with a transmit scanning path (16) for carrying transmitter signals transmitted from said transmitter, said system including a cancellation stage (10a) which includes:
a first coupler (20) coupled to said transmit path (12) of said transmitter (13) which couples transmitter signals from said transmit path (12) onto a coupled path (11);
a delay element (24) connected on said coupled path (11) to delay said coupled transmitter signals on said coupled path (11) to reflect the delay experienced by said transmitter signals transmitted from said transmit path (12) to said transmit scanning path (16);
a phase and amplitude adjuster (34) connected on said coupled path (11) to adjust the phase and amplitude of said coupled transmitter signals; and
a second coupler (36) on said coupled path (11) to couple said coupled transmitter signals on said transmit scanning path (16) to reduce said transmitter signals (12) on said transmit scanning path (16);
said cancellation stage being **CHARACTERIZED BY**:
said second coupler being coupled to said transmit scanning path (16) to sampling transmit scanning path signals prior to coupling of transmit scanning path signals with signals on said coupled path (11); and
a controller (38,66) to control said phase and amplitude adjusters (34) based at least in part on said sampled signals from said second coupler.

9. A system as claimed in claim 8 including successive cancellation stages (10a) coupled in parallel between said transmit path (12) and said transmit scanning path (16).

10. A system as claimed in claim 8 wherein said phase and attenuation adjuster serves to adjust the amplitude of said transmitter signals on said coupled path in response to measurements of said transmitter signals transmitted from said transmitter on said transmit scanning path, and to adjust said phase of said transmitter signal on said coupled path in response to measurements of said transmitter signals on said coupled path and measurements of said transmitter signals on said transmit scanning path after said transmitter signals are reduced at an output of said second coupler.

11. A system as claimed in claim 8 wherein said transmitter and said transmit scanning receiver are in the same base station.

## Patentansprüche

1. Verfahren zum Betreiben eines Kommunikationssystems (14) zum Reduzieren von von einem Sender (13) übertragenen und von einem Übertragungsabtastempfänger (30) empfangenen Sendersignalen, **GEKENNZEICHNET DURCH**:
Beschaffen einer Probe von zu übertragenden Sendersignalen aus einem Übertragungsweg (12) des Senders;
Beschaffen von vorveränderten Übertragungsabtastwegsignalen aus einem Übertragungsabtastweg (16) des Übertragungsabtastempfängers;
Verarbeiten der Sendersignalprobe zumindest teilweise auf der Grundlage der vorveränderten Übertragungsabtastwegsignale; und
Kombinieren der verarbeiteten Sendersignalprobe mit den vorveränderten Signalen auf dem Abtastweg (16) zum Reduzieren der vom Sender übertragenen und vom Übertragungsabtastempfänger empfangenen Sendersignale auf dem Übertragungsabtastweg.

2. Verfahren nach Anspruch 1, wobei der Schritt des Beschaffens den Schritt des Auskoppelns der zu übertragenden Sendersignale aus dem Übertragungsweg auf einen Koppelweg einschließt.

3. Verfahren nach Anspruch 2, wobei der Schritt des Verarbeitens den Schritt des Verzögerns der Sendersignale auf dem Koppelweg (11) einschließt, um die von den vom Sender übertragenen Sendersignalen erfahrene Verzögerung vom Übertragungsweg (12) zum Übertragungsabtastweg (16) widerzuspiegeln.

4. Verfahren nach Anspruch 2, wobei der Schritt des Verarbeitens den Schritt des Einstellens der Amplitude der Sendersignale auf dem Koppelweg (11) einschließt.

5. Verfahren nach Anspruch 2, wobei der Schritt des Verarbeitens den Schritt des Messens des Leistungspegels der vom Sender übertragenen Sendersignale zur Einstellung der Amplitude der Sendersignale auf dem Koppelweg (11) einschließt.

6. Verfahren nach Anspruch 2, wobei der Schritt des Verarbeitens den Schritt des Einstellens der Phase der Sendersignale auf dem Koppelweg (11) einschließt.

7. Verfahren nach Anspruch 2, wobei der Schritt des Kombinierens den Schritt des Aufkoppelns der Sendersignale auf dem Koppelweg auf den Übertragungsabtastweg zum Unterdrücken der vom Sender übertragenen Sendersignale einschließt.

8. Kommunikationssystem (14) mit einem Sender (13) mit einem Übertragungsweg (12) zum Führen von Sendersignalen und einem Übertragungsabtastempfänger (17) mit einem Übertragungsabtastweg (16) zum Führen von vom Sender übertragenen Sendersignalen und mit einer Löschstufe (10a) mit folgendem:
einem ersten an den Übertragungsweg (12) des Senders (13) angekoppelten Koppler (20), der Sendersignale vom Übertragungsweg (12) auf einen Koppelweg (11) aufkoppelt;
einem auf dem Koppelweg (11) angeschlossenen Verzögerungselement (24) zum Verzögern der aufgekoppelten Sendersignale auf dem Koppelweg (11), um die von den vom Übertragungsweg (12) zum Übertragungsabtastweg (16) übertragenen Sendersignalen erfahrene Verzögerung widerzuspiegeln;
einem auf dem Koppelweg (11) angeschlossenen Phasenund Amplitudeneinsteller (34) zum Einstellen der Phase und der Amplitude der aufgekoppelten Sendersignale; und
einem zweiten Koppler (36) auf dem Koppelweg (11) zum Aufkoppeln der aufgekoppelten Sendersignale auf den Übertragungsabtastweg (16) zum Reduzieren der Sendersignale (12) auf dem Übertragungsabtastweg (16);
wobei die Löschstufe **DADURCH GEKENNZEICHNET ist:**
**daß** der zweite Koppler zur Probennahme der Übertragungsabtastwegsignale vor dem Ankoppeln von Übertragungsabtastwegsignalen an Signale auf dem Koppelweg (11) an den Übertragungsabtastweg (16) angekoppelt wird; und
eine Steuerung (38, 66) zum Steuern des Phasen- und Amplitudeneinstellers (34) zumindest teilweise auf der Grundlage der Probesignale vom zweiten Koppler.

9. System nach Anspruch 8 mit aufeinanderfolgenden, parallel zwischen den Übertragungsweg (12) und den Übertragungsabtastweg (16) geschalteten Löschstufen (10a).

10. System nach Anspruch 8, wobei der Phasen- und Dämpfungseinsteller zum Einstellen der Amplitude der Sendersignale auf dem Koppelweg als Reaktion auf Messungen der vom Sender übertragenen Sendersignalen auf dem Übertragungsabtastweg und zur Einstellung der Phase des Sendersignals auf dem Koppelweg als Reaktion auf Messungen der Sendersignale auf dem Koppelweg und Messungen der Sendersignale auf dem Übertragungsabtastweg, nach Reduzierung der Sendersignale an einem Ausgang des zweiten Kopplers, dient.

11. System nach Anspruch 8, wobei sich der Sender und der Übertragungsabtastempfänger in derselben Basisstation befinden.

## Revendications

1. Procédé d'exploitation d'un système de communication (14) en vue de réduire les signaux d'émetteur transmis par un émetteur (13) et reçus par un récepteur à balayage d'émissions (30), ledit procédé étant **caractérisé par** les étapes de :
obtention, à partir d'un trajet de transmission (12) dudit émetteur, d'un échantillon de signaux d'émetteur appelés à être transmis ;
obtention, à partir d'un trajet de balayage d'émissions (16) dudit récepteur à balayage d'émissions, de signaux de trajet de balayage d'émissions prémodifiés ;
traitement dudit échantillon de signaux d'émetteur sur la base, au moins en partie, desdits signaux de trajet de balayage d'émissions prémodifiés; et
combinaison dudit échantillon de signaux d'émetteur traités auxdits signaux prémodifiés sur ledit trajet de balayage d'émissions (16) en vue de réduire, sur ledit trajet de balayage d'émissions, lesdits signaux d'émetteur transmis par ledit émetteur et reçus par ledit récepteur à balayage d'émissions.

2. Procédé selon la revendication 1, dans lequel ladite étape d'obtention comporte l'étape de couplage, dudit trajet de transmission vers un trajet couplé, desdits signaux d'émetteur appelés à être transmis.

3. Procédé selon la revendication 2, dans lequel ladite étape de traitement comporte l'étape d'introduction d'un retard dans lesdits signaux d'émetteur sur ledit trajet couplé (11) en vue de refléter le retard subi par lesdits signaux d'émetteur transmis par ledit émetteur, dudit trajet de transmission (12) audit trajet de balayage d'émissions (16).

4. Procédé selon la revendication 2, dans lequel ladite étape de traitement comporte l'étape de réglage de l'amplitude desdits signaux d'émetteur sur ledit trajet couplé (11).

5. Procédé selon la revendication 2, dans lequel ladite étape de traitement comporte l'étape de mesure du niveau de puissance desdits signaux d'émetteur transmis par ledit émetteur en vue de régler l'amplitude desdits signaux d'émetteur sur ledit trajet couplé (11).

6. Procédé selon la revendication 2, dans lequel ladite étape de traitement comporte l'étape de réglage de la phase desdits signaux d'émetteur sur ledit trajet couplé (11).

7. Procédé selon la revendication 2, dans lequel ladite étape de combinaison comporte l'étape de couplage desdits signaux d'émetteur sur ledit trajet couplé sur ledit trajet de balayage d'émissions en vue de supprimer lesdits signaux d'émetteur transmis par ledit émetteur.

8. Système de communication (14) comportant un émetteur (13) doté d'un trajet de transmission (12) destiné à transporter des signaux d'émetteur et un récepteur à balayage d'émissions (17) doté d'un trajet de balayage d'émissions (16) destiné à transporter des signaux d'émetteur transmis par ledit émetteur, ledit système comportant un étage d'annulation (10a), lequel comporte :
un premier coupleur (20), couplé audit trajet de transmission (12) dudit émetteur (13), qui couple des signaux d'émetteur issus dudit trajet de transmission (12) sur un trajet couplé (11) ;
un élément à retard (24) connecté sur ledit trajet couplé (11) en vue d'introduire un retard dans lesdits signaux d'émetteur couplés sur ledit trajet couplé (11) en vue de refléter le retard subi par lesdits signaux d'émetteur transmis dudit trajet de transmission (12) audit trajet de balayage d'émissions (16) ;
une unité de réglage de phase et d'amplitude (34) connectée sur ledit trajet couplé (11) en vue de régler la phase et l'amplitude desdits signaux d'émetteur couplés ; et
un deuxième coupleur (36) sur ledit trajet couplé (11) en vue de coupler lesdits signaux d'émetteur couplés sur ledit trajet de balayage d'émissions (16) en vue de réduire lesdits signaux d'émetteur (12) sur ledit trajet de balayage d'émissions (16) ;
ledit étage d'annulation étant **caractérisé par** :
le couplage dudit deuxième coupleur audit trajet de balayage d'émissions (16) en vue d'échantillonner des signaux de trajet de balayage d'émissions préalablement au couplage de signaux de trajet de balayage d'émissions avec des signaux sur ledit trajet couplé ; et
une unité de commande (38, 66) en vue de commander ladite unité de réglage de phase et d'amplitude (34) sur la base, au moins en partie, desdits signaux échantillonnés issus dudit deuxième coupleur.

9. Système selon la revendication 8, comportant des étages d'annulation successifs (10a) couplés en parallèle entre ledit trajet de transmission (12) et ledit trajet de balayage d'émissions (16).

10. Système selon la revendication 8, dans lequel ladite unité de réglage de phase et d'amplitude sert à régler l'amplitude desdits signaux d'émetteur sur ledit trajet couplé en réponse à des mesures desdits signaux d'émetteur transmis par ledit émetteur sur ledit trajet de balayage d'émissions, et à régler ladite phase desdits signaux d'émetteur sur ledit trajet couplé en réponse à des mesures desdits signaux d'émetteur sur ledit trajet couplé et à des mesures desdits signaux d'émetteur sur ledit trajet de balayage d'émissions suite à une réduction desdits signaux d'émetteur à une sortie dudit deuxième coupleur.

11. Système selon la revendication 8, dans lequel ledit émetteur et ledit récepteur à balayage d'émissions sont situés dans la même station de base.
